# FASCICULE DE BREVET EUROPEEN

(11) **EP 4 229 017 B1**
(45) Date de publication et mention de la délivrance du brevet: **07.08.2024**
(21) Numéro de dépôt: 21807170.2
(22) Date de dépôt: 12.10.2021
(51) Int. Cl.: C03C 17/36

(54) **MATERIAU COMPORTANT UN EMPILEMENT A COUCHE ABSORBANTE METALLIQUE ENCADREE ET PROCEDE DE DEPOT DE CE MATERIAU**
MATERIAL MIT EINEM STAPEL MIT EINGESCHLOSSENER METALLISCHER ABSORPTIONSSCHICHT UND VERFAHREN ZUR ABLAGERUNG DIESES MATERIALS
MATERIAL COMPRISING A STACK WITH ENCLOSED METALLIC ABSORBENT LAYER AND METHOD FOR DEPOSITING THIS MATERIAL

(30) Priorité: 13.10.2020 FR 2010436
(43) Date de publication de la demande: 23.08.2023
(73) Titulaire: Saint-Gobain Glass France, 92400 Courbevoie (FR)
(72) Inventeur: GUIMARD, Denis, 75013 PARIS (FR); SKOLSKI, Johann, 75018 PARIS (FR); ZENID, Nadia, 93800 EPINAY SUR SEINE (FR)
(74) Mandataire: Saint-Gobain Recherche
(86) Numéro de dépôt international: PCT/FR2021/051769
(87) Numéro de publication internationale: WO 2022/079383

(56) Documents cités:
- WO-A1-2010/142926
- FR-A1- 2 893 023
- FR-A1- 3 021 311
- FR-A1- 3 088 633

## Description

L'invention concerne un matériau comprenant un substrat revêtu sur une face d'un empilement de couches minces à propriétés de réflexion dans l'infrarouge et/ou dans le rayonnement solaire comportant au moins une couche fonctionnelle métallique, en particulier à base d'argent ou d'alliage métallique contenant de l'argent et au moins deux revêtements antireflet, lesdits revêtements antireflet comportant chacun au moins une couche diélectrique, ladite couche fonctionnelle étant disposée entre les deux revêtements antireflet.

Dans ce type d'empilement, l'unique, ou chaque, couche fonctionnelle métallique se trouve ainsi disposée entre deux revêtements antireflet comportant chacun en général plusieurs couches qui sont chacune en un matériau diélectrique du type nitrure, et notamment nitrure de silicium ou d'aluminium, ou oxyde. Du point de vu optique, le but de ces revêtements qui encadrent la ou chaque couche fonctionnelle métallique est « d'antirefléter » cette couche fonctionnelle métallique.

Il est connu de la demande internationale de brevet N° WO 2010/142926 d'appliquer un traitement par rayonnement après le dépôt d'un empilement comportant une couche fonctionnelle pour diminuer l'émissivité ou améliorer les propriétés optiques de cet empilement, en prévoyant en particulier une couche absorbante en couche terminale de l'empilement. L'utilisation d'une couche terminale absorbante permet d'accroitre l'absorption du rayonnement par l'empilement et de diminuer la puissance nécessaire au traitement. Comme la couche terminale s'oxyde lors du traitement et devient transparente, les caractéristiques optiques de l'empilement après traitement sont intéressantes (une transmission lumineuse élevée peut notamment être obtenue).

Ce traitement par rayonnement de l'empilement ne modifie pas structurellement le substrat.

De plus, FR 2 893 023 décrit un empilement de couches minces à propriétés de réflexion dans l'infrarouge.

Il est connu par ailleurs de la demande internationale de brevet N° WO 2016/051069 d'appliquer un traitement par rayonnement après le dépôt d'un empilement comportant une couche terminale métallique constituée du zinc et de l'étain, en SnₓZn_{y} avec un rapport de 0,1 ≤ x/y ≤ 2,4 et présentant une épaisseur physique comprise entre 0,5 nm et 5,0 nm en excluant ces valeurs.

Il est connu en outre de la demande internationale de brevet N° WO WO2016/193577 d'appliquer un traitement par rayonnement après le dépôt d'un empilement comportant d'une part une couche terminale qui est la couche de l'empilement qui est la plus éloignée de la face du substrat, qui comporte au moins un métal M₂, ledit métal étant un réducteur dans un couple oxyde/métal présentant un potentiel d'oxydoréduction γ₂ et ladite couche terminale étant à l'état métallique et d'autre part une couche pré-terminale qui est la couche de l'empilement située juste sous et au contact de ladite couche terminale en direction de la face du substrat, qui comporte au moins un métal M₁, ledit métal étant un réducteur dans un couple oxyde/métal présentant un potentiel d'oxydoréduction γ₁ et ladite couche pré-terminale étant à l'état au moins partiellement oxydée, ledit potentiel d'oxydoréduction γ₁ étant supérieur audit potentiel d'oxydoréduction γ₂, lesdits potentiels d'oxydoréduction étant mesurés par une électrode normale à hydrogène.

Les traitements par rayonnement sont généralement opérés par défilement du substrat dans une enceinte. Il est souhaité que le substrat passe le plus vite possible car la productivité de la ligne augmente avec la vitesse mais il faut que cette vitesse ne soit pas trop élevée pour que le traitement puisse effectivement produire l'effet escompté. En outre, une vitesse trop lente peut endommager l'empilement de couches minces.

L'invention repose sur la découverte d'une configuration particulière de quatre couches dans le revêtement terminant l'empilement à l'opposé du substrat (c'est-à-dire dans le revêtement situé au-dessus de l'unique couche fonctionnelle métallique ou au-dessus de la couche fonctionnelle métallique la plus éloignée du substrat) qui permet de diminuer l'absorption lumineuse à vitesse identique de traitement par rayonnement de l'empilement selon les techniques connues, ou d'augmenter la vitesse de traitement par rayonnement de l'empilement selon les techniques connues en conservant l'absorption lumineuse après traitement basse.

Par ailleurs, dans les documents de l'art antérieur, la couche absorbante essentielle est généralement située dans une partie terminale de l'empilement, c'est-à-dire dans une partie la plus éloignée possible de la surface du substrat porteur. Or, cette partie joue un rôle essentiel dans la tenue mécanique de l'empilement, et en particulier la tenue à la rayure, car c'est par cette partie qui est la première en contact avec l'élément rayant. Toutefois, il est difficile de concilier les deux aspects ; il est difficile de concevoir une partie terminale d'empilement qui à la fois intègre une couche absorbante destinée à réagir lors d'un traitement par rayonnement et à la fois présente une résistance à la rayure élevée.

L'invention repose sur la découverte d'une configuration particulière de quatre couches dans le revêtement terminant l'empilement à l'opposé du substrat (c'est-à-dire dans le revêtement situé au-dessus de l'unique couche fonctionnelle métallique ou au-dessus de la couche fonctionnelle métallique la plus éloignée du substrat) qui permet à la fois d'intégrer une couche absorbante et à la fois d'obtenir un empilement présentant une résistance mécanique élevée.

Un but de l'invention est ainsi de parvenir à mettre au point un nouveau type d'empilement de couches à une ou plusieurs couches fonctionnelles, empilement qui présente, après traitement rapide de l'empilement par un rayonnement, une durabilité mécanique élevée et une transmission lumineuse élevée.

Dans la configuration particulière selon l'invention, il est proposé de finir l'empilement, à l'opposé de la face du substrat qui le porte, par un revêtement sus-jacent qui comporte quatre couches : une couche métallique, absorbante, prise en sandwich entre deux couches diélectriques dont l'une au moins comporte un oxyde, puis au-dessus et au contact, une couche intermédiaire diélectrique comprenant de l'oxygène afin que cette couche intermédiaire diélectrique puisse à la fois :
- constituer un réservoir à oxygène pour permettre l'oxydation de la couche métallique lors du traitement thermique ;
- constituer elle-même une couche de protection mécanique ou présenter une nature compatible avec la présence d'une couche supplémentaire de protection mécanique ; et
- contribuer à l'obtention d'une transmission lumineuse élevée, ainsi qu'à l'obtention d'une homogénéité d'aspect, tant en transmission qu'en réflexion.

L'invention a ainsi pour objet, dans son acception la plus large, un matériau selon la revendication 1. Ce matériau comprend un substrat, verrier, revêtu sur une face d'un empilement de couches minces à propriétés de réflexion dans l'infrarouge et/ou dans le rayonnement solaire comportant au moins une, voire une seule, couche fonctionnelle métallique, en particulier à base d'argent ou d'alliage métallique contenant de l'argent et au moins deux revêtements antireflet, lesdits revêtements antireflet comportant chacun au moins une couche diélectrique, ladite couche fonctionnelle étant disposée entre les deux revêtements antireflet, ledit matériau étant remarquable en ce que le revêtement antireflet sus-jacent, situé au-dessus ladite couche fonctionnelle à l'opposé dudit substrat, comporte une couche métallique absorbante, avec une épaisseur physique de ladite couche métallique absorbante qui est comprise entre 1,0 et 8,0 nm, voire entre 1,5 et 5,0 nm, voire entre 1,8 et 2,5 nm, ladite couche métallique absorbante étant située directement sur une sous-couche diélectrique et étant située directement sous une surcouche diélectrique, avec ladite sous-couche diélectrique et/ou ladite surcouche diélectrique qui comprend de l'oxygène, et en ce que ledit revêtement antireflet sus-jacent comporte une couche intermédiaire d'oxyde comportant au moins un élément choisi parmi Sn, Zn, Zr et qui est située sur et au contact de ladite surcouche diélectrique avec une épaisseur physique de ladite couche intermédiaire d'oxyde qui est de préférence comprise entre 1,5 et 40,0 nm, voire entre 2,6 et 30,0 nm, voire entre 3,6 et 20,0 nm.

Ledit revêtement antireflet sus-jacent comporte, de préférence, une couche diélectrique comprenant de l'azote, cette couche étant de préférence une couche diélectrique de nitrure à base de silicium, ladite couche diélectrique comprenant de l'azote étant de préférence située sur et au contact de ladite couche intermédiaire d'oxyde. Cette couche diélectrique comprenant de l'azote, de préférence, ne comporte pas d'oxygène.

Ladite couche intermédiaire d'oxyde peut être elle-même une couche de protection mécanique finale ou être surmontée d'une couche de protection mécanique finale.

Ladite couche intermédiaire d'oxyde est de préférence un oxyde de zinc et d'étain, qui présente des propriétés de résistance mécanique élevées.

Ledit revêtement antireflet sus-jacent peut comporter une couche de protection terminale, ladite couche de protection terminale étant de préférence un oxyde à base de zinc et d'étain, qui présente des propriétés de résistance mécanique élevées. Elle peut aussi être un oxyde à base d'oxyde de titane et notamment à base de TiOₓ ou de TiZrOₓ.

Ladite couche de protection terminale est, de préférence, située sur et au contact de ladite couche diélectrique comprenant de l'azote. Ladite couche diélectrique comprenant de l'azote peut ainsi être interposée entre ladite couche intermédiaire d'oxyde et ladite couche de protection terminale en étant, de préférence, au contact de ces deux couches.

Ladite couche fonctionnelle métallique, ou chaque fonctionnelle métallique, présente de préférence une épaisseur physique qui est comprise entre 7,2 et 22,0 nm, voire entre 9,0 et 16,0 nm, voire entre 9,5 et 12,4 nm, voire entre 10,6 et 14,4 nm. La plage de 7,2 et 9,5 nm, voire de 7,2 et 8,5 nm peut être particulièrement appropriée pour un empilement à une seule couche fonctionnelle métallique et à haute transmission lumineuse.

Ladite sous-couche diélectrique et ladite surcouche diélectrique qui sont dans ledit revêtement antireflet sus-jacent présentent, de préférence, chacune une épaisseur physique qui est comprise entre 1,5 et 40,0 nm, voire entre 2,6 et 20,0 nm, voire entre 3,6 et 10,0 nm. Ladite sous-couche diélectrique et ladite surcouche diélectrique présentent, de préférence, la même épaisseur, afin de faciliter la fabrication de l'encadrement de la couche métallique absorbante par ladite sous-couche diélectrique et ladite surcouche diélectrique.

Ladite sous-couche diélectrique et ladite surcouche diélectrique qui sont dans ledit revêtement antireflet sus-jacent comportent, de préférence, chacune au moins un élément choisi parmi Sn, Zn, Ti, Si, Zr. Ladite sous-couche diélectrique et ladite surcouche diélectrique présentent, de préférence, la même composition chimique, afin de faciliter la fabrication de l'encadrement de la couche métallique absorbante par ladite sous-couche diélectrique et ladite surcouche diélectrique.

Ladite couche métallique absorbante comporte, de préférence, au moins un élément choisi parmi Sn, Zn, Zr, Ti, In, Nb ; elle peut être constituée de Sn, ou de Zn ou de Zr ou de Ti, ou de In, ou de Nb, ou d'un mélange de Sn et de Zn, ou d'un mélange de Sn et de In.

De préférence, ladite surcouche diélectrique ne comporte pas d'azote afin de maximiser l'effet d'oxydation sur la couche métallique absorbante lors du traitement.

Dans une variante plus facile à fabriquer, ladite sous-couche diélectrique et ladite surcouche diélectrique sont chacune constituées d'un oxyde présentant une composition qui est la stoechiométrie stable de l'élément métallique présent, ou des éléments métalliques présents s'il y en a plusieurs, dans ladite couche métallique absorbante. Elles peuvent être par exemple en TiO₂, ZrO₂, SiO₂.

Dans une autre variante plus facile à fabriquer, ladite sous-couche diélectrique et ladite surcouche diélectrique sont chacune constituées d'un oxyde présentant une composition qui est sur-stoechiométrique en oxygène par rapport à la stoechiométrie stable de l'élément métallique présent, ou des éléments métalliques présents s'il y en a plusieurs, dans ladite couche métallique absorbante. Elles peuvent être par exemple en TiOₓ, ZrOₓ, SiOₓ, avec x > 2.

De préférence, ladite surcouche diélectrique n'est pas constituée d'un oxyde présentant une composition qui est sous stoechiométrique en oxygène par rapport à la stoechiométrie stable de l'élément métallique présent, ou des éléments métalliques présents s'il y en a plusieurs, dans ladite couche métallique absorbante.

De préférence, ledit revêtement antireflet situé sous ladite couche fonctionnelle comporte en direction dudit substrat :
- une sous-couche d'oxyde à base de zinc, ZnO, qui est située sous et au contact de ladite couche fonctionnelle, avec une épaisseur physique de ladite sous-couche d'oxyde à base de zinc ZnO qui est comprise entre 0,3 et 9,0 nm, voire entre 1,0 et 7,0 nm, voire entre 1,5 et 5,0 nm ; et
- une sous-couche diélectrique d'oxyde à base de titane, TiO₂, qui est située sous et au contact de ladite sous-couche d'oxyde à base de zinc ZnO, avec une épaisseur physique de ladite sous-couche d'oxyde à base de titane, TiO₂, qui est comprise entre 10,0 et 50,0 nm, voire entre 15,0 et 45,0 nm, voire entre 20,0 et 45,0 nm.

Dans une variante spécifique, ledit revêtement antireflet situé au-dessus de ladite couche fonctionnelle comporte en outre une couche sous-intermédiaire diélectrique située entre ladite couche fonctionnelle métallique et ladite sous-couche diélectrique, cette couche sous-intermédiaire diélectrique étant de préférence oxydée et comprenant de préférence un oxyde de zinc.

Ledit empilement comporte une seule couche fonctionnelle métallique ou peut comporter deux couches fonctionnelles métalliques, ou trois couches fonctionnelles métalliques, ou quatre couches fonctionnelles métalliques ; les couches fonctionnelles métalliques dont il s'agit ici sont des couches continues.

Une couche fonctionnelle métallique comporte, de préférence, majoritairement, à au moins 50 % en pourcentage atomique, au moins un des métaux choisi dans la liste : Ag, Au, Cu, Pt ; une, plusieurs, ou chaque, couche fonctionnelle métallique est de préférence en argent.

Par « couche métallique » au sens de la présente invention, il faut comprendre que la couche ne comporte pas d'oxygène, ni d'azote.

Par « couche absorbante » au sens de la présente invention, il faut comprendre que la couche est un matériau présentant un rapport n/K sur toute la plage de longueur d'onde du visible (de 380 nm à 780 nm) entre 0 et 5 en excluant ces valeurs et présentant une résistivité électrique à l'état massif (telle que connue dans la littérature) supérieure à 10⁻⁵ Ω.cm.

Il est rappelé que n désigne l'indice de réfraction réel du matériau à une longueur d'onde donnée et k représente la partie imaginaire de l'indice de réfraction à une longueur d'onde donnée ; le rapport n/k étant calculé à une longueur d'onde donnée identique pour n et pour k.

Par « couche absorbante métallique » au sens de la présente invention, il faut comprendre que la couche est absorbante comme indiquée ci-avant et qu'elle ne comporte pas d'atome d'oxygène, ni d'atome d'azote.

Comme habituellement, par « couche diélectrique » au sens de la présente invention, il faut comprendre que du point de vue de sa nature, la couche est « non métallique », c'est-à-dire qu'elle comporte de l'oxygène ou de l'azote, voire les deux. Dans le contexte de l'invention, ce terme signifie que le matériau de cette couche présente un rapport n/k sur toute la plage de longueur d'onde du visible (de 380 nm à 780 nm) égal ou supérieur à 5.

Il est rappelé que n désigne l'indice de réfraction réel du matériau à une longueur d'onde donnée et le coefficient k représente la partie imaginaire de l'indice de réfraction à une longueur d'onde donnée, ou coefficient d'absorption ; le rapport n/k étant calculé à une longueur d'onde donnée identique pour n et pour k.

Par « au contact » on entend au sens de l'invention qu'aucune couche n'est interposée entre les deux couches considérées.

Par « à base de » on entend au sens de l'invention que pour la composition de cette couche, les éléments réactifs oxygène, ou azote, ou les deux s'ils sont présents tous les deux, ne sont pas considérés et l'élément non réactif (par exemple le silicium ou le zinc) qui est indiqué comme constituant la base, est présent à plus de 85 % atomique du total des éléments non réactifs dans la couche. Cette expression inclut ainsi ce qu'il est courant de nommer dans la technique considérée du « dopage », alors que l'élément dopant, ou chaque élément dopant, peut être présent en quantité allant jusqu'à 10 % atomique, mais sans que le total de dopant ne dépasse 15 % atomique des éléments non-réactifs.

Dans une variante particulière, ledit revêtement antireflet situé sous ladite couche fonctionnelle ne comporte aucune couche à l'état métallique. En effet, il n'est pas souhaité qu'une telle couche puisse réagir à cet endroit, et en particulier s'oxyder, lors du traitement.

Dans une variante particulière, ledit revêtement antireflet situé sous ladite couche fonctionnelle ne comporte aucune couche absorbante ; Par « couche absorbante >> au sens de la présente invention, il faut comprendre que la couche est un matériau présentant un coefficient k moyen, sur toute la plage de longueur d'onde du visible (de 380 nm à 780 nm), supérieur à 0,5 et présentant une résistivité électrique à l'état massif (telle que connue dans la littérature) qui est supérieure à 10⁻⁵ Ω.cm. En effet, il n'est pas souhaité qu'une telle couche puisse réagir à cet endroit, et en particulier s'oxyder, lors du traitement.

Il est d'autant plus surprenant d'atteindre les propriétés visées par l'invention pour ces deux variantes précédentes car des propriétés similaires sont parfois obtenues dans l'art antérieur avec ces deux variantes précédentes.

De préférence, ladite couche diélectrique de nitrure à base de silicium Si₃N₄ ne comporte pas de zirconium.

De préférence par ailleurs, ladite couche diélectrique de nitrure à base de silicium Si₃N₄ ne comporte pas d'oxygène.

La présente invention se rapporte par ailleurs à un vitrage multiple comportant un matériau selon l'invention, et au moins un autre substrat, verrier, les substrats étant maintenus ensemble par une structure de châssis, ledit vitrage réalisant une séparation entre un espace extérieur et un espace intérieur, dans lequel au moins une lame de gaz intercalaire est disposée entre les deux substrats.

Chaque substrat peut être clair ou coloré. Un des substrats au moins notamment peut être en verre coloré dans la masse. Le choix du type de coloration va dépendre du niveau de transmission lumineuse et/ou de l'aspect colorimétrique recherchés pour le vitrage une fois sa fabrication achevée.

Un substrat du vitrage, notamment le substrat porteur de l'empilement peut être bombé et/ou trempé après le dépôt de l'empilement. Il est préférable dans une configuration de vitrage multiple que l'empilement soit disposé de manière à être tourné du côté de la lame de gaz intercalaire.

Le vitrage peut aussi être un triple vitrage constitué de trois feuilles de verre séparées deux par deux par une lame de gaz. Dans une structure en triple vitrage, le substrat porteur de l'empilement peut être en face 2 et/ou en face 5, lorsque l'on considère que le sens incident de la lumière solaire traverse les faces dans l'ordre croissant de leur numéro.

La présente invention se rapporte par ailleurs à un procédé d'obtention, ou de fabrication, d'un matériau comportant un substrat, verrier, revêtu sur une face d'un empilement de couches minces à propriétés de réflexion dans l'infrarouge et/ou dans le rayonnement solaire comportant au moins une, voire une seule, couche fonctionnelle métallique, en particulier à base d'argent ou d'alliage métallique contenant de l'argent et deux revêtements antireflet, lesdits revêtements antireflet comportant chacun au moins une couche diélectrique, ladite couche fonctionnelle étant disposée entre les deux revêtements antireflet, ledit procédé comprenant les étapes suivantes, dans l'ordre :
- le dépôt sur une face dudit substrat d'un empilement de couches minces à propriétés de réflexion dans l'infrarouge et/ou dans le rayonnement solaire comportant au moins une, voire une seule, couche fonctionnelle métallique, en particulier à base d'argent ou d'alliage métallique contenant de l'argent et au moins deux revêtements antireflet, afin de former un matériau selon l'invention, puis
- le traitement dudit empilement de couches minces à l'aide d'une source produisant un rayonnement, notamment un rayonnement infrarouge, et en particulier un rayonnement laser, afin de traiter l'empilement de couches minces en tant que tel.

Ledit traitement est, de préférence, opéré dans une atmosphère ne comprenant pas d'oxygène.

La vitesse du traitement dudit empilement de couches minces à l'aide d'une source produisant un rayonnement, notamment un rayonnement infrarouge, et en particulier un rayonnement laser, est de préférence comprise entre 8 et 18 m/min, voire entre 10 et 18 m/min.

Les détails et caractéristiques avantageuses de l'invention ressortent des exemples non limitatifs suivants, illustrés à l'aide des figures ci-jointes illustrant :
- la figure 1 illustre une structure d'un empilement monocouche fonctionnelle selon l'invention, la couche fonctionnelle étant déposée directement sur une sous-couche de blocage et directement sous une surcouche de blocage, l'empilement étant illustré pendant le traitement à l'aide d'une source produisant un rayonnement ;
- la figure 2 et la figure 3 illustrent chacune un double vitrage incorporant un empilement selon l'invention ;
- la figure 4 illustre l'absorption lumineuse LA, en pourcent, de certains exemples d'empilements de couches minces en fonction de la vitesse S de défilement du substrat en mètres par minute pendant le traitement illustré en figure 1 ;

- la figure 5 illustre la visibilité à la rayure SV, en unité arbitraire (a.u.), de certains exemples d'empilements de couches minces en fonction de la charge Ld appliquée, en Newton, lors de tests Erichsen à la pointe ; et
- la figure 6 illustre l'absorption lumineuse LA, en pourcent, d'autres exemples d'empilements de couches minces en fonction de la vitesse S de défilement du substrat en mètres par minute pendant le traitement illustré en figure 1.

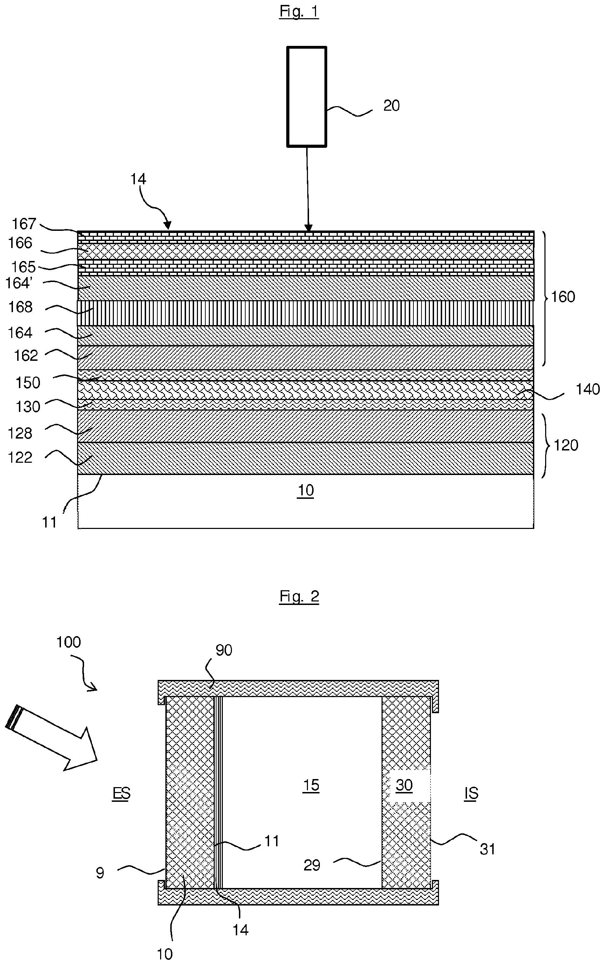

Dans les figures 1 à 3, les proportions entre les épaisseurs des différentes couches ou des différents éléments ne sont pas rigoureusement respectées afin de faciliter leur lecture.

La figure 1 illustre une structure d'un empilement 14 monocouche fonctionnelle selon l'invention déposé sur une face 11 d'un substrat 10 verrier, transparent, dans laquelle la couche fonctionnelle 140 unique, en particulier à base d'argent ou d'alliage métallique contenant de l'argent, est disposée entre deux revêtements antireflet, le revêtement antireflet 120 sous-jacent situé en dessous de la couche fonctionnelle 140 en direction du substrat 30 et le revêtement antireflet 160 sus-jacent disposé au-dessus de la couche fonctionnelle 140 à l'opposé du substrat 30. Ces deux revêtements antireflet 120, 160, comportent chacun au moins une couche diélectrique 122, 128 ; 162, 164, 164', 165, 166, 167.

En figure 1, la couche fonctionnelle 140 est située indirectement sur le revêtement antireflet 120 sous-jacent et indirectement sous le revêtement antireflet 160 sus-jacent : il y a une couche de sous-blocage 130 située entre le revêtement antireflet 120 sous-jacent et la couche fonctionnelle 140 et une couche de sur-blocage 150 située entre la couche fonctionnelle 140 et le revêtement antireflet 160.

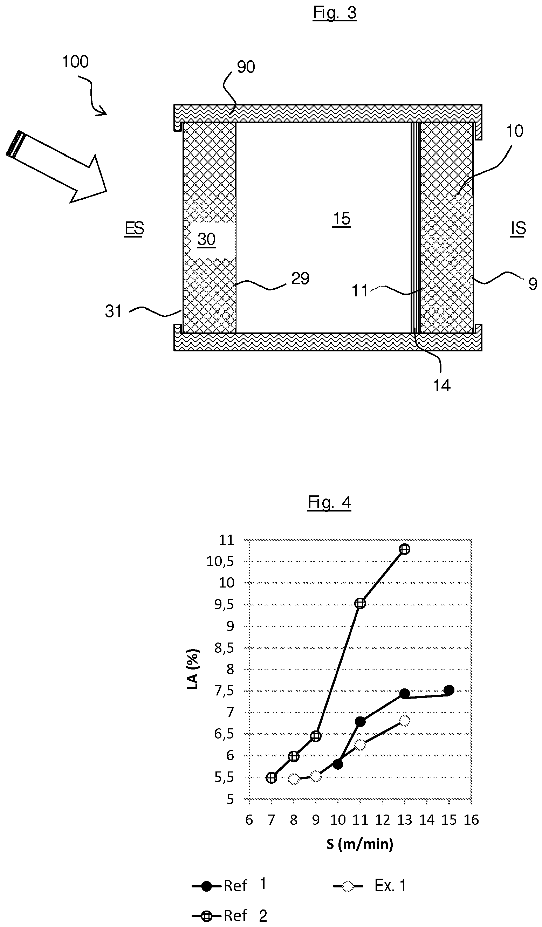

Un tel empilement de couches minces peut être utilisé dans un vitrage multiple 100 réalisant une séparation entre un espace extérieur ES et un espace intérieur IS ; ce vitrage peut présenter une structure de double vitrage, comme illustré en figures 2 ou 3 : ce vitrage est alors constitué de deux substrats 10, 30, qui sont maintenus ensemble par une structure de châssis 90 et qui sont séparés l'un de l'autre par une lame de gaz intercalaire 15.

En figures 2 et 3, le sens incident de la lumière solaire entrant dans le bâtiment est illustré par la double flèche, à gauche.

En figure 2, l'empilement 14 de couches minces est positionné en face 2 (sur la feuille la plus à l'extérieur du bâtiment en considérant le sens incident de la lumière solaire entrant dans le bâtiment et sur sa face tournée vers la lame de gaz), c'est-à-dire sur une face intérieure 14 du substrat 10 en contact avec la lame de gaz intercalaire 15, l'autre face 11 du substrat 10 étant en contact avec l'espace extérieur ES. Le substrat 30, non porteur d'un empilement, présente une face 29 en contact avec la lame de gaz intercalaire 15, l'autre face 31 du substrat 30 étant en contact avec l'espace intérieur IS.

En figure 3, l'empilement 14 de couches minces est positionné en face 3 (sur la feuille la plus à l'intérieur du bâtiment en considérant le sens incident de la lumière solaire entrant dans le bâtiment et sur sa face tournée vers la lame de gaz), c'est-à-dire sur une face intérieure 11 du substrat 10 en contact avec la lame de gaz intercalaire 15, l'autre face 9 du substrat 10 étant en contact avec l'espace intérieur IS. Le substrat 30, non porteur d'un empilement, présente une face 29 en contact avec la lame de gaz intercalaire 15, l'autre face 31 du substrat 30 étant en contact avec l'espace extérieur ES.

Toutefois, il peut aussi être envisagé que dans cette structure de double vitrage, l'un des substrats présente une structure feuilletée.

Une série d'exemples a été réalisée sur la base de la structure d'empilement illustrée en figure 1 avec, en partant de la surface 14 du substrat 10, d'une épaisseur de 4 mm, uniquement les couches suivantes, dans cet ordre :
- une couche diélectrique de dioxyde de titane, TiOz 122 d'une épaisseur physique de 24 nm, déposée à partir d'une cible en dioxyde de titane dans une atmosphère à 6,25 % d'oxygène sur le total d'oxygène et d'argon et sous une pression de 2.10⁻³ mbar ;
- une couche d'oxyde à base de zinc, ZnO 128, d'une épaisseur physique de 4 nm, déposée à partir d'une cible céramique en ZnO, dans une atmosphère d'argon et sous une pression de 2.10⁻³ mbar ;
- une couche fonctionnelle métallique 140 à base d'argent, et plus précisément ici en argent, d'une épaisseur physique de 13,5 nm, déposée à partir d'une cible métallique en argent, dans une atmosphère d'argon et sous une pression de 8.10⁻³ mbar ;
- une couche de surblocage 150, métallique, en titane, d'une épaisseur physique de 0,4 nm, déposée à partir d'une cible en titane dans une atmosphère d'argon et sous une pression de 8.10⁻³ mbar ;
- une couche diélectrique d'oxyde à base de zinc, ZnO 162, d'une épaisseur physique de 4,0 nm, déposée à partir d'une cible céramique en ZnO, dans une atmosphère d'argon et sous une pression de 2.10⁻³ mbar ;
- une couche diélectrique de dioxyde de titane, TiO₂ 164 d'une épaisseur physique de 12 nm, déposée à partir d'une cible en dioxyde de titane dans une atmosphère à 6,25 % d'oxygène sur le total d'oxygène et d'argon et sous une pression de 2.10⁻³ mbar ;
- une couche diélectrique de nitrure à base de silicium, Si₃N₄, 166 d'une épaisseur physique de 15 nm, déposée à partir d'une cible en silicium dopé à l'aluminium, à 92 % en poids de silicium et 8 % en poids d'aluminium dans une atmosphère à 45 % d'azote sur le total d'azote et d'argon et sous une pression de 2.10⁻³ mbar ;
- une couche diélectrique d'oxyde 167 mixte de zinc et d'étain SnₓZn_{y}O, d'une épaisseur physique de 15 nm, déposée à partir d'une cible métallique à 50 % en poids d'étain et 50 % en poids de zinc dans une atmosphère à 75 % d'oxygène sur le total d'argon et d'oxygène et sous une pression de 2.10⁻³ mbar ; et
- une couche métallique 168, absorbante, en SnₓZn_{y}, d'une épaisseur physique de 2 nm, déposée à partir d'une cible métallique à 50 % en poids d'étain et 50 % en poids de zinc dans une atmosphère d'argon et sous une pression de 2.10⁻³ mbar.

Dans cette structure, il n'y a pas de couche de sous-blocage 130 située entre le revêtement antireflet 120 sous-jacent et la couche fonctionnelle 140.

Les éléments Sn et Zn présentent chacun un rapport 0 < n/k < 5 sur toute la plage de longueur d'onde du visible et une résistivité électrique à l'état massif qui est supérieure à 10⁻⁵ Ω.cm.

L'argent présente aussi un rapport 0 < n/k < 5 sur toute la plage de longueur d'onde du visible, mais sa résistivité électrique à l'état massif est inférieure à 10⁻⁵ Ω.cm.

Dans cette série, l'empilement décrit au pragraphe précédant contistue une première référence (« Ref 1 » sur les figures) ; cette référence est basée sur l'exemple 4 de la demande internationale de brevet N° WO 2016/193577.

Dans cette série, un second exemple de référence (« Ref 2 >> sur les figures) a été réalisé en disposant les mêmes couches 122, 128, 140, 150, 162, 164, 166 et 168 que pour la première référence, dans le même ordre, avec les mêmes matériaux sauf pour :
- une couche diélectrique de nitrure à base de silicium, Si₃N₄, 166 d'une épaisseur physique de 25,0 nm (à la place de 15,0 nm), déposée à partir d'une cible en silicium dopé à l'aluminium, à 92 % en poids de silicium et 8 % en poids d'aluminium dans une atmosphère à 45 % d'azote sur le total d'azote et d'argon et sous une pression de 2.10⁻³ mbar ; et
- sans couche diélectrique d'oxyde 167 entre la couche 166 et la couche 168.

Un exemple 1 (« Ex. 1 » sur les figures) a été réalisé en disposant sur le substrat les mêmes couches 122, 128, 140, 150, 162, que pour la première référence, dans le même ordre, avec les mêmes matériaux et les mêmes épaisseurs, puis, dans cet ordre :
- une sous-couche diélectrique de dioxyde de titane, TiO₂ 164 d'une épaisseur physique de 5,0 nm, déposée à partir d'une cible en dioxyde de titane dans une atmosphère à 6,25 % d'oxygène sur le total d'argon et d'oxygène et sous une pression de 2.10⁻³ mbar ;
- une couche métallique 168, absorbante, en Ti, d'une épaisseur physique de 2 nm, déposée à partir d'une cible métallique en titane dans une atmosphère d'argon et sous une pression de 2.10⁻³ mbar ;
- une surcouche diélectrique de dioxyde de titane, TiO₂ 164' d'une épaisseur physique de 5,0 nm, déposée à partir d'une cible en dioxyde de titane dans une atmosphère à 6,25 % d'oxygène sur le total d'oxygène et d'argon et sous une pression de 2.10⁻³ mbar ;
- une couche intermédiaire d'oxyde 165, à base de zinc et d'étain SnₓZn_{y}O, d'une épaisseur physique de 5 nm, déposée à partir d'une cible métallique à 50 % en poids d'étain et 50 % en poids de zinc dans une atmosphère à 75 % d'oxygène sur le total d'argon et d'oxygène et sous une pression de 2.10⁻³ mbar ;
- une couche diélectrique de nitrure à base de silicium, Si₃N₄, 166 d'une épaisseur physique de 15 nm, déposée à partir d'une cible en silicium dopé à l'aluminium, à 92 % en poids de silicium et 8 % en poids d'aluminium dans une atmosphère à 45 % d'azote sur le total d'azote et d'argon et sous une pression de 2.10⁻³ mbar ; et
- une couche diélectrique d'oxyde 167 mixte de zinc et d'étain SnₓZn_{y}O, d'une épaisseur physique de 15 nm, déposée à partir d'une cible métallique à 50 % en poids d'étain et 50 % en poids de zinc dans une atmosphère à 75 % d'oxygène sur le total d'argon et d'oxygène et sous une pression de 2.10⁻³ mbar.

L'élément Ti présente aussi un rapport 0 < n/k < 5 sur toute la plage de longueur d'onde du visible et une résistivité électrique à l'état massif qui est supérieure à 10⁻⁵ Ω.cm.

La figure 4 illustre en ordonnée l'absorption lumineuse, LA, en pourcent, des empilements de référence et de l'exemple 1 après leur dépôt et après le traitement laser.

Ce traitement de laser a constisté ici en un défilement du substrat 10 à une vitesse S variant de 7 mètres par minute à 15 mètres par minutes sous une ligne laser 20 avec un faisceau continu d'une longueur d'onde de 973,1 nm, de 0,06 mm de large, 11,20 mm de long et de puissance totale de 453 W, avec la ligne laser orientée quasiment perpendiculairement à la face 11 (avec une inclinaison de 7°) et en direction de l'empilement 14, c'est-à-dire en disposant la ligne laser au-dessus de l'empilement, comme visible en figure 1 (la flèche noire droite illustrant l'orientation de la lumière émise), à une distance de 114 mm de la face 11.

Avant le traitement de laser, l'absorption lumineuse LA des références 1 et 2 était respectivement de 34 % et 25 % et celle de l'exemple 1 de 15 %. Le traitement de laser a provoqué la diminution de l'absorption lumineuse LA et cette diminution conduit à une absorption lumineuse finale plus petite pour l'exemple 1 que pour les références, quelle que soit la vitesse de défilement. Il est donc possible d'augmenter la vitesse de défilement du substrat, et ainsi augmenter la productivité.

La résistance à la rayure a été testée avec une machine de test « Scratch Hardness Test 413 » de la société ERICHSEN : on déplace une pointe en métal dur Van Laar de diamètre 0,55 mm équipée d'une pointe en carbure de tungstène et chargée d'un poids sur le substrat à une vitesse donnée. On note la visibilité à travers la zone testée par la pointe en fonction de la charge, en unité arbitraire mais comparable d'un test à l'autre. Les tests de résistante mécanique ont été réalisés après le dépôt de l'empilement et après un traitement de l'empilement par un rayonnement de laser, de façon identique aux traitement précédents.

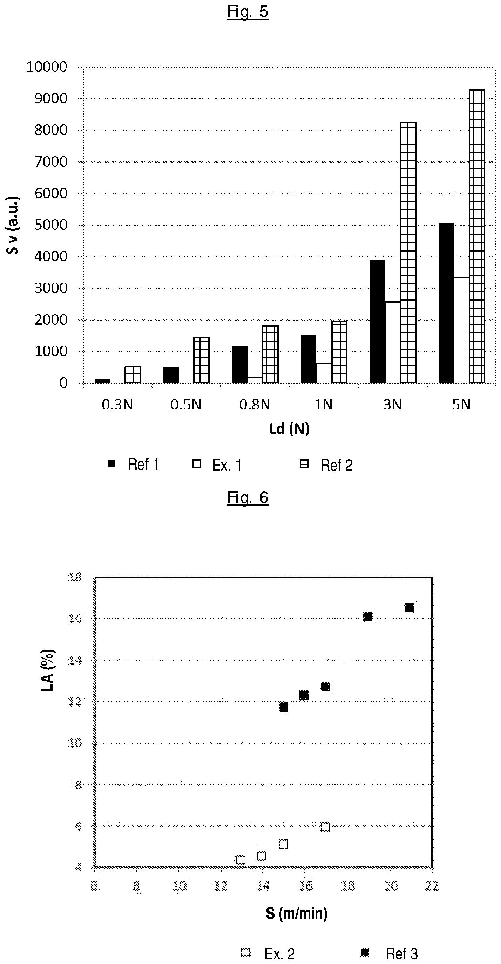

La figure 5 montre la visibilité des rayures pour la référence 1, l'exemple 1 et la référence 2, dans cet ordre, pour chaque charge (la visibilité des rayures de l'exemple 1 est située, pour chaque charge, entre la visibilité des rayures de la référence 1 et la visibilité des rayures de la référence 2 : pour des charges faibles (jusqu'à 0,8 Newton), moyennes (de 1 Newton et 3 Newtons) et élevées (de 5 Newtons), l'exemple 1 présente toujours une rayure moins visible que les références ; cette visibilité est en particulier proche de zéro pour les charges faibles. Il est ainsi possible de tirer un bénéfice de la présence de la couche métallique absorbante à l'intérieur du revêtement diélectrique sus-jacent tout en conservant une résistance mécanique élevée.

Un exemple 2 (« Ex. 2 » sur les figures) a été réalisé en disposant sur le substrat les mêmes couches 122, 128, 140, 150, 162, 164, 164', 165, 166 et 167 que pour l'exemple 1, dans le même ordre, avec les mêmes matériaux et les mêmes épaisseurs, et, pour la couche métallique 168, absorbante, située au même endroit, non pas du Ti, mais du SnZn, d'une épaisseur physique de 2 nm, déposée à partir d'une cible métallique composée à 50 % en poids de Sn et 50 % en poids de Zn, dans une atmosphère d'argon et sous une pression de 2.10⁻³ mbar.

Les éléments Sn et Zn présentent aussi un rapport 0 < n/k < 5 sur toute la plage de longueur d'onde du visible et une résistivité électrique à l'état massif qui est supérieure à 10⁻⁵ Ω.cm.

Une autre référence (« Ref 3 » sur la figure) a été réalisée sur la base de l'exemple 2 en changeant uniquement la surcouche diélectrique 164' : en déposant à la place du TiO₂ du Si₃N₄ d'une épaisseur physique de 5,0 nm, déposée à partir d'une cible en silicium dopé à l'aluminium, à 92 % en poids de silicium et 8 % en poids d'aluminium dans une atmosphère à 45 % d'azote sur le total d'azote et d'argon et sous une pression de 2.10⁻³ mbar.

La figure 6 illustre en ordonnée l'absorption lumineuse, LA, en pourcent, des empilements de la référence 3 et de l'exemple 2, mesurée comme auparavant, après leur dépôt et après le même traitement laser que pour l'exemple 1 et les références 1 et 2.

Avant le traitement de laser, l'absorption lumineuse LA de la référence 3 était de 23 % et celle de l'exemple 2 de 27 %. Le traitement de laser a provoqué la diminution de l'absorption lumineuse LA et cette diminution conduit à une absorption lumineuse finale plus petite pour l'exemple 2 que pour les références 1 à 3, quelle que soit la vitesse de défilement. Il est donc possible d'augmenter la vitesse de défilement du substrat, et ainsi augmenter la productivité.

Par contre, l'absorption lumineuse résiduelle de la référence 3 est beaucoup trop élevée, quelle que soit la vitesse.

La résistance à la rayure de l'exemple 2 est aussi bonne que celle de l'exemple 1.

La présente invention est décrite dans ce qui précède à titre d'exemple. Il est entendu que l'homme du métier est à même de réaliser différentes variantes de l'invention sans pour autant sortir du cadre du brevet tel que défini par les revendications.

## Revendications

1. Matériau comprenant un substrat (10), verrier, revêtu sur une face (11) d'un empilement de couches minces (14) à propriétés de réflexion dans l'infrarouge et/ou dans le rayonnement solaire comportant au moins une, voire une seule, couche fonctionnelle métallique (140), en particulier à base d'argent ou d'alliage métallique contenant de l'argent et au moins deux revêtements antireflet (120, 160), lesdits revêtements antireflet comportant chacun au moins une couche diélectrique (125, 165), ladite couche fonctionnelle (140) étant disposée entre les deux revêtements antireflet (120, 160), ***caractérisé en ce que*** le revêtement antireflet (160) sus-jacent, situé au-dessus de ladite couche fonctionnelle (140) à l'opposé dudit substrat (30), comporte une couche métallique absorbante (168), avec une épaisseur physique de ladite couche métallique absorbante (168) qui est comprise entre 1,0 et 8,0 nm, voire entre 1,5 et 5,0 nm, voire entre 1,8 et 2,5 nm, ladite couche métallique absorbante (168) étant située directement sur une sous-couche diélectrique (164) et étant située directement sous une surcouche diélectrique (164'), avec ladite sous-couche diélectrique (164) et/ou ladite surcouche diélectrique (164') qui comprend de l'oxygène,
***et en ce que*** ledit revêtement antireflet (160) sus-jacent comporte une couche intermédiaire d'oxyde (165) comportant au moins un élément choisi parmi Sn, Zn, Zr et qui est située sur et au contact de ladite surcouche diélectrique (164') avec une épaisseur physique de ladite couche intermédiaire d'oxyde (165) qui est de préférence comprise entre 1,5 et 40,0 nm, voire entre 2,6 et 30,0 nm, voire entre 3,6 et 20,0 nm.

2. Matériau selon la revendication 1, dans lequel ledit revêtement antireflet (160) sus-jacent comporte une couche diélectrique comprenant de l'azote (166), de préférence une couche diélectrique de nitrure à base de silicium, ladite couche diélectrique comprenant de l'azote (166) étant de préférence située sur et au contact de ladite couche intermédiaire d'oxyde (165).

3. Matériau selon la revendication 1 ou 2, dans lequel ledit revêtement antireflet (160) sus-jacent comporte une couche de protection terminale (167), ladite couche de protection terminale (167) étant de préférence un oxyde à base de zinc et d'étain ou étant à base d'oxyde de titane.

4. Matériau selon la revendication 3, dans lequel ladite couche de protection terminale (167) est située sur et au contact de ladite couche diélectrique comprenant de l'azote (166).

5. Matériau selon une quelconque des revendications 1 à 4, dans lequel ladite couche fonctionnelle métallique (140), présente une épaisseur physique qui est comprise entre 7,2 et 22,0 nm, voire entre 9,0 et 16,0 nm, voire entre 10,6 et 14,4 nm.

6. Matériau selon une quelconque des revendications 1 à 5, dans lequel ladite sous-couche diélectrique (164) et ladite surcouche diélectrique (164') présentent chacune une épaisseur physique qui est comprise entre 1,5 et 40,0 nm, voire entre 2,6 et 20,0 nm, voire entre 3,6 et 10,0 nm.

7. Matériau selon une quelconque des revendications 1 à 6, dans lequel ladite sous-couche diélectrique (164) et ladite surcouche diélectrique (164') comportent chacune au moins un élément choisi parmi Sn, Zn, Ti, Si, Zr.

8. Matériau selon une quelconque des revendications 1 à 6, dans lequel ladite couche métallique absorbante (168) comporte au moins un élément choisi parmi Sn, Zn, Zr, Ti, In, Nb.

9. Vitrage multiple comportant un matériau selon l'une quelconque des revendications 1 à 8, et au moins un autre substrat (30) verrier, les substrats (10, 30) étant maintenus ensemble par une structure de châssis (90), ledit vitrage réalisant une séparation entre un espace extérieur (ES) et un espace intérieur (IS), dans lequel au moins une lame de gaz intercalaire (15) est disposée entre les deux substrats.

10. Procédé d'obtention d'un matériau comportant un substrat (10), verrier, revêtu sur une face (11) d'un empilement de couches minces (14) à propriétés de réflexion dans l'infrarouge et/ou dans le rayonnement solaire comportant au moins une, voire une seule, couche fonctionnelle métallique (140), en particulier à base d'argent ou d'alliage métallique contenant de l'argent et deux revêtements antireflet (120, 160), lesdits revêtements antireflet comportant chacun au moins une couche diélectrique (122, 164), ladite couche fonctionnelle (140) étant disposée entre les deux revêtements antireflet (120, 160), ledit procédé comprenant les étapes suivantes, dans l'ordre :
- le dépôt sur une face (11) dudit substrat (10) verrier, d'un empilement de couches minces (14) à propriétés de réflexion dans l'infrarouge et/ou dans le rayonnement solaire comportant au moins une, voire une seule, couche fonctionnelle métallique (140), en particulier à base d'argent ou d'alliage métallique contenant de l'argent et au moins deux revêtements antireflet (120, 160), afin de former un matériau selon l'une quelconque des revendications 1 à 8, puis
- le traitement dudit empilement de couches minces (14) à l'aide d'une source produisant un rayonnement et notamment un rayonnement infrarouge.

11. Procédé selon la revendication 10, dans lequel ledit traitement est opéré dans une atmosphère ne comprenant pas d'oxygène.

## Patentansprüche

1. Material, umfassend ein Glassubstrat (10), das auf einer Fläche (11) mit einer Stapelung von Dünnschichten (14) mit Reflexionseigenschaften in dem Infrarotbereich und/oder in der Sonnenstrahlung beschichtet ist, die mindestens eine, oder sogar nur eine, funktionelle Metallschicht (140), insbesondere auf Basis von Silber oder einer Metalllegierung, die Silber enthält, und mindestens zwei Antireflexbeschichtungen (120, 160) aufweist, wobei die Antireflexbeschichtungen jeweils mindestens eine dielektrische Schicht (125, 165) aufweisen, wobei die funktionelle Schicht ( 140) zwischen den zwei Antireflexbeschichtungen (120, 160) angeordnet ist, ***dadurch gekennzeichnet, dass*** die darüberliegende Antireflexbeschichtung (160), die sich über der funktionellen Schicht (140) gegenüber dem Substrat (30) befindet, eine absorbierende Metallschicht (168) aufweist, mit einer physischen Dicke der absorbierenden Metallschicht (168), die zwischen 1,0 und 8,0 nm oder sogar zwischen 1,5 und 5,0 nm oder sogar zwischen 1,8 und 2,5 nm liegt, wobei sich die absorbierende Metallschicht (168) direkt auf einer dielektrischen Unterschicht (164) befindet und sich direkt unter einer dielektrischen Überschicht (164') befindet, wobei die dielektrische Unterschicht (164) und/oder die dielektrische Überschicht (164') Sauerstoff enthält,
***und dass die*** darüberliegende Antireflexionsbeschichtung (160) eine Zwischenoxidschicht (165) aufweist, die mindestens ein Element aufweist, das aus Sn, Zn, Zr ausgewählt ist, und sich auf und in Kontakt mit der dielektrischen Überschicht (164') befindet, mit einer physischen Dicke der Zwischenoxidschicht (165), die vorzugsweise zwischen 1,5 und 40,0 nm oder sogar zwischen 2,6 und 30,0 nm oder sogar zwischen 3,6 und 20,0 nm liegt.

2. Material nach Anspruch 1, wobei die darüberliegende Antireflexbeschichtung (160) eine dielektrische Schicht aufweist, umfassend Stickstoff (166), vorzugsweise eine dielektrische Schicht auf Basis von Siliziumnitrid, wobei sich die dielektrische Schicht, umfassend Stickstoff (166), vorzugsweise auf und in Kontakt mit der Zwischenoxidschicht (165) befindet.

3. Material nach Anspruch 1 oder 2, wobei die darüberliegende Antireflexbeschichtung (160) eine Endschutzschicht (167) umfasst, wobei die Endschutzschicht (167) vorzugsweise ein Oxid auf Basis von Zink und Zinn ist oder auf Basis von Titanoxid ist.

4. Material nach Anspruch 3, wobei sich die Endschutzschicht (167) auf und in Kontakt mit der dielektrischen Schicht befindet, umfassend Stickstoff (166).

5. Material nach einem der Ansprüche 1 bis 4, wobei die funktionelle Metallschicht (140) eine physische Dicke vorweist, die zwischen 7,2 und 22,0 nm oder sogar zwischen 9,0 und 16,0 nm oder sogar zwischen 10,6 und 14,4 nm liegt.

6. Material nach einem der Ansprüche 1 bis 5, wobei die dielektrische Unterschicht (164) und die dielektrische Oberschicht (164') jeweils eine physische Dicke vorweisen, die zwischen 1,5 und 40,0 nm oder sogar zwischen 2,6 und 20,0 nm oder sogar zwischen 3,6 und 10,0 nm liegt.

7. Material nach einem der Ansprüche 1 bis 6, wobei die dielektrische Unterschicht (164) und die dielektrische Oberschicht (164') jeweils mindestens ein Element aufweisen, das aus Sn, Zn, Ti, Si, Zr ausgewählt ist.

8. Material nach einem der Ansprüche 1 bis 6, wobei die absorbierende Metallschicht (168) mindestens ein Element aufweist, das aus Sn, Zn, Zr, Ti, In, Nb ausgewählt ist.

9. Mehrfachverglasung, die mindestens ein Material nach einem der Ansprüche 1 bis 8 und mindestens ein anderes Glassubstrat (30) aufweist, wobei die Substrate (10, 30) durch eine Rahmenstruktur (90) zusammengehalten werden, wobei die Verglasung eine Trennung zwischen einem Außenraum (ES) und einem Innenraum (IS) herstellt, wobei mindestens ein Zwischenlagengasspalt (15) zwischen den zwei Substraten angeordnet ist.

10. Verfahren zum Gewinnen eines Materials, das ein Glassubstrat (10) aufweist, das auf einer Fläche (11) mit einer Stapelung von Dünnschichten (14) mit Reflexionseigenschaften in dem Infrarotbereich und/oder in der Sonnenstrahlung beschichtet ist, die mindestens eine, oder sogar nur eine, funktionelle Metallschicht (140), insbesondere auf Basis von Silber oder einer Metalllegierung, die Silber enthält, und zwei Antireflexbeschichtungen (120, 160) aufweist, wobei die Antireflexbeschichtungen jeweils mindestens eine dielektrische Schicht (122, 164) aufweisen, wobei die funktionelle Schicht (140) zwischen den zwei Antireflexbeschichtungen (120, 160) angeordnet ist, das Verfahren umfassend die folgenden Schritte in der Reihenfolge:
- Aufbringen auf eine Fläche (11) des Glassubstrats (10) einer Stapelung von Dünnschichten (14) mit Reflexionseigenschaften in dem Infrarotbereich und/oder in der Sonnenstrahlung, die mindestens eine, oder sogar nur eine, funktionelle Metallschicht (140), insbesondere auf Basis von Silber oder einer Metalllegierung, die Silber enthält, und mindestens zwei Antireflexbeschichtungen (120, 160) aufweist, um ein Material nach einem der Ansprüche 1 bis 8 auszubilden, dann
- Behandeln der Stapelung von Dünnschichten (14) mithilfe einer Quelle, die eine Strahlung und insbesondere eine Infrarotstrahlung produziert.

11. Verfahren nach Anspruch 10, wobei das Behandeln in einer Atmosphäre durchgeführt wird, umfassend keinen Sauerstoff.

## Claims

1. A material comprising a glass substrate (10) coated on one side (11) with a stack of thin layers (14) having reflective properties in the infrared and/or in solar radiation, comprising at least one, or even only one, metallic functional layer (140), in particular based on silver or a metal alloy containing silver, and at least two anti-reflective coatings (120, 160), said anti-reflective coatings each comprising at least one dielectric layer (125, 165), said functional layer (140) being arranged between the two anti-reflective coatings (120, 160), ***characterized in that*** the overlying anti-reflective coating (160), located above said functional layer (140) opposite said substrate (30), comprises an absorbent metal layer (168), with a physical thickness of said absorbent metal layer (168) that is between 1.0 and 8.0 nm, or between 1.5 and 5,0 nm, or between 1.8 and 2.5 nm, said absorbent metal layer (168) being located directly on a dielectric underlayer (164) and being located directly under a dielectric overlayer (164'), said dielectric underlayer (164) and/or said dielectric overlayer (164') comprising oxygen,
***and in that*** said overlying anti-reflective coating (160) comprises an intermediate oxide layer (165) comprising at least one element chosen from Sn, Zn, Zr and which is located on and in contact with said dielectric overcoat (164'), a physical thickness of said intermediate oxide layer (165) preferably being between 1.5 and 40.0 nm, or even between 2.6 and 30.0 nm, or even between 3.6 and 20.0 nm.

2. The material according to claim 1, wherein said overlying anti-reflective coating (160) comprises a nitrogen-comprising dielectric layer (166), preferably a silicon-based nitride dielectric layer, said nitrogen-comprising dielectric layer (166) preferably being located on and in contact with said oxide interlayer (165).

3. The material according to claim 1 or 2, wherein said overlying anti-reflective coating (160) comprises a terminal protective layer (167), said terminal protective layer (167) preferably being a zinc-tin based oxide or being titanium oxide based.

4. The material according to claim 3, wherein said terminal protective layer (167) is located on and in contact with said nitrogen-comprising dielectric layer (166).

5. The material according to any one of claims 1 to 4, wherein said metallic functional layer (140), or each metallic functional layer, has a physical thickness which is between 7.2 and 22.0 nm, or even between 9.0 and 16.0 nm, or even between 10.6 and 14.4 nm.

6. The material according to any one of claims 1 to 5, wherein said dielectric underlayer (164) and said dielectric overlayer (164') each have a physical thickness that is between 1.5 and 40.0 nm, or even between 2.6 and 20.0 nm, or even between 3.6 and 10.0 nm.

7. The material according to any one of claims 1 to 6, wherein said dielectric underlayer (164) and said dielectric overlayer (164') each comprise at least one element selected from Sn, Zn, Ti, Si, Zr.

8. The material according to any one of claims 1 to 6, wherein said absorbent metal layer (168) comprises at least one element selected from Sn, Zn, Zr, Ti, In, Nb.

9. A multiple glazing comprising a material according to any one of claims 1 to 8, and at least one other glass substrate (30), the substrates (10, 30) being held together by a frame structure (90), said glazing producing a separation between an exterior space (ES) and an interior space (IS), wherein at least one interlayer gas gap (15) is arranged between the two substrates.

10. A method for obtaining a material comprising a glass substrate (10) coated on one face (11) with a stack of thin layers (14) having reflective properties in the infrared and/or in solar radiation, comprising at least one, or even just one, metallic functional layer (140), in particular based on silver or on metal alloy containing silver and two anti-reflective coatings (120, 160), said anti-reflective coatings each comprising at least one dielectric layer (122, 164), said functional layer (140) being arranged between the two anti-reflective coatings (120, 160), said method comprising the following steps, in order:
- depositing, on one face (11) of said glass substrate (10), a stack of thin layers (14) having reflective properties in the infrared and/or in solar radiation, comprising at least one, or even just one, metallic functional layer (140), in particular based on silver or on metal alloy containing silver and at least two anti-reflective coatings (120, 160), in order to form a material according to any one of claims 1 to 8, then
- treating said stack of thin layers (14) using a source producing radiation, and particularly infrared radiation.

11. The method according to claim 10, wherein said treatment is carried out in an oxygen-free atmosphere.
